(19) Europäisches Patentamt
European Patent Office
Office européen des brevets

(11) **EP 2 646 538 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(21) Anmeldenummer: **11794080.9**

(22) Anmeldetag: **01.12.2011**

(51) Int Cl.:
*C11D 3/12* (2006.01)    *C11D 3/37* (2006.01)
*C11D 17/04* (2006.01)   *B01J 20/32* (2006.01)
*C02F 1/28* (2006.01)

(86) Internationale Anmeldenummer:
**PCT/EP2011/071521**

(87) Internationale Veröffentlichungsnummer:
**WO 2012/072742 (07.06.2012 Gazette 2012/23)**

(54) **POLYKATIONISCHE KOLLOIDPARTIKEL, VERFAHREN ZU DEREN HERSTELLUNG UND DEREN VERWENDUNG ZUR MODIFIZIERUNG VON SUBSTRATEN**

POLYCATIONIC COLLOID PARTICLES, PROCESS FOR PREPARING THEM AND USE THEREOF FOR MODIFYING SUBSTRATES

PARTICULES COLLOÏDALES POLYCATIONIQUES, LEUR PROCÉDÉ DE PRODUCTION ET LEUR UTILISATION POUR MODIFIER DES SUBSTRATS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2010 DE 102010062286**

(43) Veröffentlichungstag der Anmeldung:
**09.10.2013 Patentblatt 2013/41**

(73) Patentinhaber: **Rudolf GmbH**
**82538 Geretsried (DE)**

(72) Erfinder:
• **JIANG, Longying**
**82538 Geretsried (DE)**
• **HAASE-MOELLMANN, Maria Elisabete**
**82538 Geretsried (DE)**
• **THUMM, Stefan**
**83646 Bad Tölz (DE)**
• **DUSCHEK, Gunther**
**83671 Benediktbeuern (DE)**

(74) Vertreter: **Weickmann & Weickmann PartmbB**
**Postfach 860 820**
**81635 München (DE)**

(56) Entgegenhaltungen:
EP-A2- 0 033 815        WO-A1-01/94516
WO-A1-2007/063001   WO-A2-02/103105
GB-A- 2 432 844

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft polykationische Kolloidpartikel, polykationische Kolloiddispersionen, deren Herstellung, sowie deren Verwendung zur Modifizierung von Substraten. Ferner ist die Erfindung auf die modifizierten Substrate und deren Verwendung zum Entfernen (poly)anionischer Verbindungen aus flüssigen Medien gerichtet.

Polykationische Verbindungen, d.h. Verbindungen mit mehreren kationischen Gruppen, sind seit langem bekannt und werden in unterschiedlichen Anwendungsbereichen eingesetzt. Im Bereich der textilen Anwendung werden polykationische Verbindungen u.a. als Farbstoffübertragungsinhibitoren, als Nachbehandlungsmittel für gefärbte Textilien und als Adsorptionsmittel für freie Farbstoffe in der Waschflotte eingesetzt. Weiterhin finden polykationische Verbindungen Anwendung als antimikrobielle Mittel oder als Flockungsmittel zur Klärung von Abwässern der Papier- und Textilindustrie. Insbesondere ist der Fokus auf die Verwendung polykationischer Verbindungen beim Reinigen von gefärbten Textilien gerichtet.

Während des Waschvorgangs löst sich ungebundener Farbstoff aus buntem Waschgut und geht in die Waschflotte über. Das so genannte Ausbluten ist besonders ausgeprägt beim Reinigen neuer Kleidungsstücke. Die "freien" Farbstoffe können sich auf anderen Kleidungsstücken oder an unerwünschten Stellen ablagern. Um das Verfärben der Wäsche durch Ausbluten zu verhindern, werden auf Seiten der Farbstoffhersteller große Anstrengungen unternommen die Fixierung des Farbstoffs an der Faser zu verbessern.

Trotz aller Bemühungen kann ein Ausbluten, insbesondere aus Baumwolle, Wolle und Seide, nicht gänzlich unterdrückt werden. Die für diese Textilien verwendeten Direkt-, Säure- und Reaktivfarbstoffe sind in der Waschflotte meist anionisch geladen.

Die Vielfalt der Farbstoffchemie erschwert die Entwicklung einer einfachen Methode, um die unerwünschte Farbstoffübertragung von einem Kleidungsstück auf ein anderes oder von einer Stelle eines Kleidungsstücks auf eine andere zu verhindern.

Universelle Farbstoffübertragungsinhibitoren sind insbesondere chlorhaltige Bleichmittel, die allerdings den Nachteil haben, dass auch das gesamte Waschgut selbst gebleicht wird, und die Kleidung nach mehrmaligem Waschen nicht mehr die gewünschte Farbinensität aufweist.

Die Entwicklung von Farbstoffübertragungsinhibitoren wurde zusätzlich durch die Tatsache erschwert, dass die Farbstoffübertragungsinhibitoren mit den waschaktiven Verbindungen wechselwirken und deren Wasch- und Reinigungseffektivität negativ beeinflussen können.

Vielfältige Farbstoffinhibitoren, die der Waschflotte zugesetzt werden, wurden entwickelt. Die Farbstoffinhibitoren sind meist wasserlöslich und binden die ausgebluteten Farbstoffe in der Waschflotte über chemische oder physikalische Wechselwirkungen. Aufgrund ihrer Löslichkeit in Wasser gelangen die Farbstoffinhibitoren bzw. die Farbstoffinhibitor/Farbstoff-Komplexe allerdings mit der Waschflotte ins Abwasser.

DE 2 321 724 A beschreibt eine wasserlösliche Waschmittelmischung, die eine Polyurethan-Polyalkylenimin-Verbindung enthält, die Direktfarbstoffe und anionische Farbstoffe adsorbiert.

DE 2 309 099 A beschreibt Farbstoffinhibitoren in Form von Kondensationsprodukten, die aus einer Mischung organischer Amine hergestellt werden, wobei ein kleiner Anteil einer organischer Verbindung vorliegt, die einen basischen Stickstoff enthält.

DE 3 519 012 A beschreibt eine Waschmittelzusammensetzung mit wasserlöslichen kationischen Ammonium-, Imidazolinium- oder Pyridiniumsalzen als Farbstoffinhibitoren auf Basis von N-Vinylimidazol, N-Vinyloxazolidon oder N-Vinylpyrrolidon

DE 3 840 056 A schlägt wasserlösliche quaternäre Ammoniumverbindungen als gute Farbstoffübertragungsinhibitoren für bestimmte Farbstoffe vor. Diese Farbstoffinhibitoren können aber mit anionischem Netzmittel unverträglich sein oder die die Reinigungsleistung stark reduzieren.

DE 3 124 210 A beschreibt eine flüssige Waschmittelformulierung, die als Farbstoffübertragungsinhibitor wasserlösliche Polymere wie Polyacrylamid oder teilweise hydrolysierte Polyacrylamide, Polyethylenimine und Polyaminamide enthält.

WO 1994/002581 beschreibt Polyamin-N-oxid enthaltende Polymere als effektive Farbstoffübertragungsinhibitoren.

WO 1996/026831 beschreibt einen Textilträger, der einen Farbstoffübertragungsinhibitor auf Basis einer wasserlöslichen quaternären Ammonium-hydroxy-haloalkyl-Monomer-Verbindung enthält. Dieser Träger wird mitgewaschen und setzt den Farbstoffinhibitor während des Waschprozesses frei.

Die beschriebenen (Poly)Kationen sind allesamt wasserlöslich und werden, sofern sie auf einem Substrat aufgebracht sind, beim Waschprozess abgelöst. Dabei ist nachteilig, dass die Farbstoffinhibitoren bzw. die Farbstoffinhibitor/Farbstoffkomplexe in das Abwasser gelangen und dieses zusätzlich belasten.

EP 33 815 A2 beschreibt Textilsubstrate, insbesondere aus Cellulose, welche mit einer quaternären Ammoniumverbindung bzw. einer quaternierten Ammoniumepoxidverbindung ausgerüstet sind, zum Auffangen frei gewordener Farbstoffe und Pigmente in der Waschflotte.

US 3,673,110 offenbart ein Cellulosesubstrat, dessen anionische Oberfläche mit Polyamin kationisch ausgerüstet wurde, um anionische Farbstoffe zu absorbieren.

WO 02/12424 beschreibt die Kationisierung von Polyester durch Aminolyse und anschließende Behandlung mit Expoxy-funktionalisierten quaternären Ammoniumionen. Dieses Verfahren ist nur unter Einsatz von großen Mengen an starken Alkalilaugen möglich, die mit hohem Aufwand an Waschwasser entfernt werden müssen. Darüber hinaus müssen zur kationischen Ausrüstung des Polyesters toxikologisch bedenkliche Epoxidverbindungen, wie z.B. 2,3-Epoxypropyltrimethylammoniumchlorid oder Epichlorhydrin, eingesetzt werden. Die harschen Reaktionsbedingungen schädigen darüber hinaus das Trägermaterial.

DE 10 2009 027 047 A1 offenbart einen textilen Waschartikel, auf den eine bleichmittelfreie Waschmittelzusammensetzung verfestigt vorliegt, wobei das textile Substrat mit einer permanenten Ausrüstung mit Farbfängereigenschaften versehen ist. Die farbfangende Verbindung geht mit dem textilen Substrat bevorzugt eine ionische oder kovalente Bindung ein. Als farbfangende Verbindung werden insbesondere kationische Polymere eingesetzt.

Ein allgemeines Problem der geträgerten Farbstoffinhibitoren des Standes der Technik ist, dass die kationische Ladungsdichte, d.h. die Anzahl der kationischen Gruppen pro Flächeneinheit, nicht ausreicht, um ein effektives Abfangen von Farbstoffmolekülen in der Waschflotte zu gewährleisten.

So wird in EP 1 775 372 beschrieben, dass ein Textilmaterial zumindest teilweise aufgeraut wird, bevor es kationisch ausgerüstet wird, um eine gewisse Oberflächenvergrößerung zu erreichen und damit eine größere Anzahl an kationischen Gruppen auf dem Textilmaterial aufzubringen. Ein derartiges Verfahren macht einen weiteren Verfahrensschritt vor der textilen Ausrüstung notwendig und schädigt offensichtlich das textile Gewebe.

Darüber hinaus konnten bisher nur Substrate mit funktionellen Gruppen, wie z.B. Cellulose, waschpermanent mit Farbstoffübertragungsinhibitoren ausgerüstet werden, während eine Modifizierung synthetischer Fasern zu keinen befriedigenden Ergebnissen führte.

WO 01/94516 A1 offenbart die Verwendung von kationisch modifizierten, teilchenförmigen hydrophoben Polymeren, deren Oberfläche durch Belegung mit kationischen Polymeren kationisch modifiziert ist, als Zusatz zu Spül-, Pflege-, Wasch- und Reinigungsmitteln.

GB 2 432 844 A offenbart Polymerpartikel umfassend einen Duftstoff, ein Polymer und ein kationisches Hilfsmittel, die dem Gewebe während des Waschens zugeführt werden und ihm dadurch einen langanhaltenden Duft verleihen.

WO 2007/063001 A1 ist auf Mikro- oder Nanokapseln gerichtet, die zwei verschiedene funktionelle Gruppen auf der äußeren Schale der Partikel aufweisen, die eine Abscheidung auf textile Oberflächen erlauben und in der Lage sind, anschließend kovalent an das Textil zu binden.

WO 02/103105 A2 offenbart Verfahren zur schmutzablösungsfördernden Behandlung von Oberflächen textiler und nicht textiler Materialien, bei dem kationisch modifizierte hydrophile Nanopartikel auf Basis vernetzter Polymere aus einer wässrigen Dispersion auf die Oberfläche der Materialien aufgebracht werden.

Die Aufgabe der vorliegenden Erfindung bestand somit darin, die Nachteile des Standes der Technik auszuräumen.

Insbesondere sollte ein permanent polykationisch modifiziertes Substrat mit erhöhter Ladungsdichte bereitgestellt werden. Darüber hinaus sollte die Modifizierung von Substraten ohne funktionellen Gruppen ermöglicht werden.

Diese Aufgabe wird erfindungsgemäß gelöst durch Bereitstellung von polykationischen Kolloidalpartikeln, umfassend mindestens einen Partikelkern und eine darauf liegende Agglomeratschicht, wobei die Agglomeratschicht mindestens ein organisches Polykation, welches ein organisches Polymer ist, das mindestens 5 kationische Gruppen aufweist, mindestens ein Molekül mit mindestens einer reaktiv vernetzenden Gruppe, ausgewählt aus Epoxiden, Halogeniden, (blockierten) Isocyanaten, N-Methylol und ungesättigten Gruppen, und mindestens ein Molekül mit mindestens einer funktionellen Gruppe, ausgewählt aus Amino-, Hydroxy-, Amid- Imid und Carboxy-Gruppen, enthält, und wobei der Partikelkern anorganische Oxide, ausgewählt aus $MgO$, $SiO_2$, $TiO_2$, und $Al_2O_3$ oder/und anorganische Salze ausgewählt aus Salzen auf Silikat-, Aluminat-, Titanat-, Carbonat- oder/und Sulfat-Basis enthält und wobei der Durchmesser des Kolloidpartikels 10 nm bis 100 $\mu$m beträgt.

Bei einem Kolloidpartikel handelt es sich um ein festes Teilchen, das mit einem flüssigen Medium eine stabile kolloidale Dispersion bildet. Der erfindungsgemäße Kolloidalpartikel ist ferner polykationisch modifiziert, d.h. er weist, insbesondere auf seiner Oberfläche, mehrere kationische Gruppen auf.

Der Durchmesser des Kolloidpartikels beträgt 10 nm bis 100 $\mu$m, bevorzugt 10 nm bis 50 $\mu$m, stärker bevorzugt 20 nm bis 20 $\mu$m, stärker bevorzugt 50 nm bis 10 $\mu$m

Der Kolloidalpartikel umfasst mindestens einen Partikelkern, der eine anorganische Verbindung, nämlich anorganische Oxide ausgewählt aus $MgO$, $SiO_2$, $TiO_2$ und $Al_2O_3$, stärker bevorzugt $SiO_2$ oder/und $TiO_2$, enthält.

Andere anorganische Verbindungen sind anorganische Salze auf Silikat-, Aluminat-, Titanat-, Carbonat-, Hydroxid- oder/und Sulfatbasis.

Im Wesentlichen in Wasser schwerlösliche anorganische Salze, wie z.B. Calciumsulfat, Magnesiumsulfat oder Natriumsulfat; Calciumcarbonat oder Magnesiumcarbonat; natürlich vorkommende oder synthetische Alumosilikate oder Aluminate, z.B. Magnesiumaluminat; Bariumtitanat oder Aluminiumtitanat; Calciumhydroxid oder Magnesiumhydroxid; oder/und Calcium-, Magnesium-, Eisen-, Zirkon- oder, insbesondere Zeolith und Schichtsilikate, werden beschrieben.

Als anorganische Salze werden Alumosilikate, insbesondere Zeolith und Schichtsilikate, beschrieben.

Die Dispersionen der anorganischen Oxide sind bevorzugt farblos oder nur leicht gefärbt.

Als organische Partikelkerne werden im wesentlichen wasserunlösliche Feststoffe, wie z.B. geladene oder/und ungeladene Polymere oder Oligomere, insbesondere Polyacrylate, Polymethacrylate, Polyolefine, modifizierte Stärken oder modifizierte Cellulosen beschrieben.

Ferner können als organische Partikelkerne auch im wesentlichen wasserunlösliche organische Salze, wie z.B. Calciumstearat oder Magnesiumstearat, kolloidal gefällte Alkylbenzolsulfonsäuren, und Fettalkohole, Fettamine, Fettsäuren, z.B. deren Derivate oder deren Ethoxylate eingesetzt werden.

Die verwendeten Partikelkerne haben einen Durchmesser von 1 nm bis 1000 nm, bevorzugt von 2 nm bis 800 nm, stärker bevorzugt von 5 nm bis 500 nm und am stärksten bevorzugt von 10 nm bis 300 nm.

Die Partikelkerne können ferner chemisch oder physikalisch modifiziert, z.B. hydrophobisiert, hydrophilisiert, anionifiziert oder kationifiziert, sein.

Die den Partikelkern umgebenden Moleküle, nämlich mindestens ein organisches Polykation, sowie mindestens ein Molekül mit mindestens einer reaktiv vernetzenden Gruppe und mindestens ein Molekül mit mindestens einer funktionellen Gruppen, bilden aufgrund physikalischer Wechselwirkungen, wie z.B. van-der-Waals-Wechselwirkungen, ionischen Wechselwirkungen, oder/und Verschlaufung (entanglement), ein Agglomerat, das den Partikelkern umgibt und am Partikelkern haftet. Die Agglomeratschicht bleibt selbst bei Vorliegen des Kolloidpartikels in flüssigem Medium an dem Partikelkern haften.

Diese Agglomeratschicht enthält wie in Anspruch 1 definiert mindestens ein organisches Polykation, mindestens ein Molekül mit mindestens einer reaktiv vernetzenden Gruppe und mindestens ein Molekül mit mindestens einer funktionellen Gruppe.

Ein organisches Polykation ist ein organisches Polymer, das mindestens 5, stärker bevorzugt mindestens 10, noch stärker bevorzugt mindestens 100 oder mindestens 150 kationische Gruppe(n) aufweist. Die kationischen Gruppen können im Polymerrückgrat positioniert sein oder/und über die Seitenketten an das Polymerrückgrat gebunden sein. Das zahlenmittlere Molekulargewicht von einem organischen Polykation beträgt üblicherweise zwischen 1.000 bis 10.000.000 g/mol, bevorzugt von 5.000 bis 2.000.000 g/mol, bevorzugt von 10.000 bis 300.000 g/mol, besonders bevorzugt von 10.000 bis 80.000 g/mol.

Das organische Polykation weist bevorzugt quaternäre kationische Gruppen, bevorzugt quaternäre Ammonium-, Pyridinium-, Imidazolium-, Pyrrolidinium-, oder/und Phosphoniumionen, stärker bevorzugt quaternäre Ammonium-, Pyridinium- oder/und Phosphoniumionen, besonders bevorzugt quaternäre Ammoniumionen, auf.

Organische Polykationen basieren beispielsweise auf Homo- und Copolymeren von Diallylamin (DAA) und seinen Derivaten; Homo- und Copolymeren von Vinylpyrrolidon, Vinylimidazol, Vinylpyridin-N-oxid oder/und gegebenenfalls weiteren Monomeren; Polyvinylamin und seinen Derivaten; Polyamid und seinen Derivaten; Polyethylenimin und seinen Derivaten; Kondensaten aus Formaldehyd und Verbindungen mit mindestens zwei Aminofunktionen, z.B. Dicyandiamid, Harnstoff, Diaminen, Triaminen oder/und Polyaminen; Stärke und Cellulose.

Die kationische Modifizierung der o.g. Polymere erfolgt über dem Fachmann geläufige Methoden, wie z.B. Alkylierung der Aminogruppen in einem Polymer mit organischen Halogeniden, wie z.B. Methylchlorid, 1-Chlor-2,3-epoxypropan, oder/und Umsetzung der im Polymer enthaltenen Hydroxygruppen mit Alkylhalogenid-Ammoniumsalz (z.B. 2-Hydroxy-3-chlorpropyltrimethylammoniumchlorid), oder mit Epoxypropylammoniumsalz (z.B. Epoxypropyltrimethylammoniumchlorid).

Bevorzugte organische Polykationen sind Copolymere auf Basis von Diallylamin oder/und Diallylamin-Derivaten, z.B. Copolymere aus DAA mit Diallyldimethylammoniumchlorid (DADMAC) oder Poly-DADMAC-codimethylsiloxan, Kondensaten aus Formaldehyd und Verbindungen mit mindestens zwei Aminofunktionen, z.B. Dicyandiamid, Harnstoff, Diaminen, Triaminen oder/und Polyaminen; kationisch modifizierte Stärke und Cellulose.

Ferner umfasst die Agglomeratschicht mindestens ein Molekül mit mindestens einer, bevorzugt mindestens 5, stärker bevorzugt mindestens 10, noch stärker bevorzugt mindestens 100 oder mindestens 150 reaktiv vernetzenden Gruppe(n).

Reaktiv vernetzende Gruppen sind Gruppen, die nach Aktivierung, insbesondere nach chemischer oder/und thermischer Aktivierung (z.B. durch erhöhte Temperatur, Änderung des pH-Werts, Zugabe von Katalysator) mit komplementären Gruppen, sogenannten funktionellen Gruppen, reagieren und dabei kovalente Bindungen bilden. Die reaktiv vernetzenden Gruppen sind während der Herstellung, bei Lagerung und Weiterverarbeitung unter üblichen Bedingungen (< 60 °C) inert.

Reaktiv vernetzende Gruppen sind ausgewählt aus Epoxiden, Halogeniden, (blockierten) Isocyanaten, N-Methylol oder/und ungesättigten Gruppen, wie z.B. endständigen Vinylgruppen. Bevorzugte reaktiv vernetzende Gruppen sind Epoxide, Halogenide, (blockierte) Isocyanate und N-Methylol.

Bevorzugt ist das Molekül mit mindestens einer reaktiv vernetzenden Gruppe ein organisches Polymer, insbesondere mit einem zahlenmittleren Molekulargewicht von üblicherweise 1.000 bis 10.000.000 g/mol, bevorzugt von 5.000 bis 2.000.000 g/mol, bevorzugt von 10.000 bis 300.000 g/mol, besonders bevorzugt von 10.000 bis 80.000 g/mol.

Bevorzugte Polymere mit mindestens einer reaktiv vernetzenden Gruppe sind Polyisocyanate, zumindest teilweise blockierte Polyisocyanate, Homo- und Copolymere auf Basis von Glycidylmethacrylat, oder N-Methylolacrylamid, mit 1-Chlor-2,3-epoxypropan modifiziertes Polymer oder Kondensate auf Basis von Formaldehyd und Verbindungen mit mindestens zwei Aminofunktionen, z.B. Dicyandiamid, Harnstoff, Diaminen, Triaminen oder/und Polyaminen.

In einer besonders bevorzugten Ausführungsvariante ist das Molekül mit mindestens einer vernetzenden Gruppe ein organisches Polykation, d.h. das organische Polykation enthält neben den kationischen Gruppen weiterhin mindestens eine reaktiv vernetzende Gruppe. Ein derart modifiziertes organisches Polykation ist somit gleichzeitig ein Molekül mit mindestens einer reaktiv vernetzenden Gruppe. Ausgehend von den o.g. Basispolymeren für Polykationen ist dem Fachmann die Einführung von reaktiv vernetzenden Gruppen in das Polykation oder den Polykationprecursor wohl bekannt. Beispiele für organische Polykationen mit mindestens einer reaktiv vernetzenden Gruppe sind beispielsweise mit 1-Chlor-2,3-epoxypropan modifiziertes Polyamin z. B. Resicart E (Ciba-Geigy).

Die Agglomeratschicht enthält zusätzlich ein Molekül mit mindestens einer, bevorzugt mindestens 5, stärker bevorzugt mindestens 10, noch stärker bevorzugt mindestens 100 oder mindestens 150 funktionellen Gruppe(n), enthalten.

Funktionelle Gruppen sind Gruppen, die mit den reaktiv vernetzenden Gruppen unter Bildung von kovalenten Bindungen reagieren können. Als funktionelle Gruppen können beispielsweise Amino-, Hydroxy-, Amid- oder/und Carboxygruppen verwendet werden. Bevorzugte funktionelle Gruppen sind Amino- und Hydroxygruppen.

In einer bevorzugten Ausführungsform ist das Molekül mit mindestens einer funktionellen Gruppe ein organisches Polymer, bevorzugt mit einem zahlenmittleren Molekulargewicht von üblicherweise 1.000 bis 10.000.000 g/mol, bevorzugt von 5.000 bis 2.000.000 g/mol, bevorzugt von 10.000 bis 300.000 g/mol, besonders bevorzugt von 10.000 bis 80.000 g/mol.

Bevorzugte Polymere mit mindestens einer funktionellen Gruppe sind beispielsweise Polyamine, Polyethylenimin, Polyester, Polyacrylsäuren, Polyacrylamide, Polyurethan, Copolymere auf Basis von DAA oder Kondensate aus Formaldehyd und Verbindungen mit mindestens zwei Aminofunktionen, z.B. Dicyandiamid, Harnstoff, Diaminen, Triaminen oder/und Polyaminen.

In einer besonders bevorzugten Ausführungsvariante ist das Molekül mit mindestens einer funktionellen Gruppe ein organisches Polykation, d.h. das organische Polykation enthält neben den kationischen Gruppen ferner mindestens eine funktionelle Gruppe. In dieser Ausführungsform ist das organische Polykation gleichzeitig auch ein Molekül mit mindestens einer funktionellen Gruppe.

Ausgehend von den o.g. Basispolymeren für Polykationen ist dem Fachmann die Einführung von funktionellen Gruppen in das Polykation oder den Polykationprecursor wohl bekannt. Beispiele für organische Polykationen mit mindestens einer funktionellen Gruppe basieren auf Homo- und Copolymeren von Polyvinylamin oder/und Diallylamin (DAA) und seinen Derivaten oder/und gegebenenfalls weiteren Monomeren; Copolymeren von Vinylpyridin-N-oxid, Vinylpyrrolidon, Vinylimidazol oder/und gegebenenfalls weiteren Monomeren; Polyvinylamin und seinen Derivaten; Polyethylenimin und seinen Derivaten; Kondensaten aus Formaldehyd und Verbindungen mit mindestens zwei Aminofunktionen, z.B. Dicyandiamid, Harnstoff, Diaminen, Triaminen oder/und Polyaminen oder polykationisch modifizierter Stärke und Cellulose.

In einer besonders bevorzugten Ausführungsform enthält das organische Polykation mindestens eine reaktiv vernetzende Gruppe und mindestens eine funktionelle Gruppe. In dieser Ausführungsvariante ist das organische Polykation gleichzeitig ein Molekül mit mindestens einer reaktiv vernetzenden Gruppe und ein Molekül mit mindestens einer funktionellen Gruppe. Dem Fachmann ist bekannt entsprechende funktionelle Gruppen und reaktiv vernetzende Gruppen in das organische Polykation oder die Polykationvorstufe einzuführen.

Bevorzugte organische Polykationen mit mindestens einer reaktiv vernetzenden Gruppe und mindestens einer funktionellen Gruppe basieren z.B. auf 1-Chlor-2,3-epoxypropan und/oder mit (blockiertem) polyisocyanatmodifiziertem Polyamin, z.B. Copolymer von DAA oder/und seinen Derivaten und Polyvinylamin oder/und gegebenenfalls weiteren Monomeren, Copolymeren von N-Methylolacrylamid mit kationischem Monomer oder/und gegebenenfalls weiteren Monomeren, oder Kondensaten aus Formaldehyd und Verbindungen mit mindestens zwei Aminofunktionen, z.B. Dicyandiamid, Harnstoff, Diaminen, Triaminen oder/und Polyaminen.

In einer weiteren Ausführungsform enthält die Agglomeratschicht mindestens ein Polymer mit mindestens einer reaktiv vernetzenden Gruppe und mindestens einer funktionellen Gruppe. Ein derartiges Polymer hat üblicherweise ein zahlenmittleres Molekulargewicht von 1.000 bis 10.000.000 g/mol, bevorzugt von 5.000 bis 2.000.000 g/mol, bevorzugt von 10.000 bis 300.000 g/mol, besonders bevorzugt von 10.000 bis 80.000 g/mol.

In dieser Ausführungsvariante ist das Polymer somit gleichzeitig ein Molekül mit mindestens einer reaktiv vernetzenden Gruppe und ein Molekül mit mindestens einer funktionellen Gruppe.

Die Herstellung von Polymeren mit funktionellen und vernetzenden Gruppen erfolgt üblicherweise ausgehend von Polymeren mit funktionellen Gruppen, wie z.B. Polyvinylamin, Kondensaten aus Formaldehyd und Verbindungen mit mindestens zwei Aminofunktionen, z.B. Dicyandiamid, Harnstoff, Diaminen, Triaminen oder/und Polyaminen, und anschließender Modifikation mit reaktiv vernetzenden Gruppen. Beispiele für Polymere mit funktionellen und reaktiv vernetzenden Gruppen sind Epoxid-funktionalisierte Polyvinylamine und N-Methylol-funktionalisierte Kondensate aus Formaldehyd und Verbindungen mit mindestens zwei Aminofunktionen, z.B. Dicyandiamid, Harnstoff, Diaminen, Triaminen oder/und Polyaminen

In einer besonders bevorzugten Ausführungsform der vorliegenden Erfindung enthält die Agglomeratschicht ein organisches Polykation mit reaktiv vernetzenden Gruppen und ein organisches Polykation mit funktionellen Gruppen.

In einer bevorzugten Ausführungsform der vorliegenden Erfindung sind die kationischen Gruppen des organischen Polykations, die reaktiv vernetzenden Gruppen und die funktionellen Gruppen jeweils unterschiedlich voneinander. Das heißt, eine kationische Gruppe kann nicht gleichzeitig eine reaktiv vernetzende Gruppe oder eine funktionelle Gruppe sein und vice versa.

Das molare Verhältnis von kationischen Gruppen : reaktiv vernetzenden Gruppen : funktionellen Gruppen im Kolloidpartikel liegt im Bereich von 1 bis 100 : 0,1 bis 10 : 0 bis 100, bevorzugt von 1 bis 50 : 0,1 bis 5 : 0,1 bis 50, stärker bevorzugt von 1 bis 10 : 0,1 bis 1 : 0,1 bis 10.

Das Gewichtsverhältnis von Agglomeratschicht zu Partikelkern liegt durchschnittlich bei 1 : 1-1000:1, bevorzugt bei 1:1 bis 500:1, stärker bevorzugt bei 5 : 1 bis 200 : 1.

Ein weiterer Aspekt der vorliegenden Erfindung ist eine polykationische Kolloiddispersion, umfassend

    (a) die erfindungsgemäßen polykationischen Kolloidalpartikel,
    (b) mindestens ein flüssiges Medium,
    (c) gegebenenfalls mindestens ein Dispergierhilfsmittel und
    (d) gegebenenfalls mindestens ein Additiv.

In der erfindungsgemäßen Kolloiddispersion sind die Kolloidpartikel gemäß der Erfindung kolloidal in mindestens einem flüssigen Medium verteilt. Bevorzugt ist die kolloidale Dispersion stabil. Eine Kolloiddispersion ist stabil, wenn über 1 Woche, bevorzugt 1 Monat, stärker bevorzugt 6 Monate keine Phasentrennung mit dem bloßen Auge wahrnehmbar ist.

Die erfindungsgemäßen polykationischen Kolloidpartikel machen 0,2-80 Gew.-%, bevorzugt 0,5-60 Gew.-%, stärker bevorzugt 1-40 Gew.-% oder 3-30 Gew.-% bezogen auf die gesamte Kolloiddispersion aus.

Das flüssige Medium ist vorzugsweise Wasser, organisches Lösungsmittel, wie z.B. Alkohol, Aceton oder eine Mischung davon. Besonders bevorzugt ist Wasser mit 0-5 % organischem Lösungsmittel, stärker bevorzugt ist Wasser als Dispersionsmedium.

Die Kolloiddispersionen enthalten bevorzugt 20 bis 99 Gew.-%, bevorzugt 25-95 Gew.-%, stärker bevorzugt 50-98 Gew.-%, noch stärker bevorzugt 65 bis 95 Gew.-% flüssiges Medium bezogen auf die Gesamtmenge der Kolloiddispersion.

Ferner können in der Kolloiddispersion Dispergierhilfsmittel, wie z.B. kationische, nichtionische, amphotere oder/und anionische Tenside oder Mischungen davon, vorliegen. Bevorzugt sind nichtionische oder/und kationische Tenside, besonders bevorzugt sind kationische Tenside.

Die Kolloiddispersion kann zwischen 0 bis 20 Gew.-%, bevorzugt zwischen 0,1 bis 15 Gew.-%, stärker bevorzugt zwischen 0,2 bis 10 Gew.-%, noch stärker bevorzugt zwischen 0,3 bis 3 Gew.-% Dispergierhilfsmittel bezogen auf die Gesamtmenge der Kolloiddispersion enthalten.

Amphotere Tenside sind z.B. (Acylamidoalkyl)betaine. Anionische Tenside sind z.B. Natriumdodecylsulfat, bis-(2-Ethylhexyl)-sulfosuccinat oder Alkylbenzolsulfonate. Bevorzugte nichtionische Tenside sind n-Alkylpolyethylenglykolether, Alkylphenolpolyglykolether oder Sorbitane.

Bevorzugte kationische Dispergierhilfsmittel sind quaternäre Ammoniumsalze, wie z.B. Di-($C_{10}$-$C_{24}$)-Alkyldimethylammoniumchlorid, ($C_{10}$-$C_{24}$)-Alkyldimethylethylammoniumchlorid/-bromid, ($C_{10}$-$C_{24}$)-Alkyltrimethylammoniumchlorid/-bromid, ($C_{10}$-$C_{24}$)-Alkyldimethylbenzylammoniumchlorid, N-($C_{10}$-$C_{18}$)-Alkylpyridiniumchlorid/-bromid, N-($C_{10}$-$C_{18}$)-Isochinoliniumchlorid/-bromid oder -monoalkylsulfat, N-($C_{10}$-$C_{18}$)-Alkyl-N-methylammoniummorpholiniumchlorid/-bromid oder -monoalkylsulfat, N-($C_{10}$-$C_{18}$)-Alkyl-N-ethylammouniummorpholiniumchlorid/-bromid oder -monoalkylsulfat; N-($C_{10}$-$C_{18}$)-Alkylmethylpolyoxyethylenammoniumchlorid/-bromid oder -monoalkylsulfat, Dodecyltrimethylammoniumbromid; oder Salze von primären, sekundären und tertiären Fettaminen mit 8 bis 24 C-Atomen mit organischen oder anorganischen Säuren, wie z.B. Essigsäure, Milchsäure, Zitronensäure, Salzsäure.

Besonders bevorzugte Dispergierhilfsmittel sind quaternäre Ammoniumsalze.

Ferner kann in der Kolloiddispersion mindestens ein Additiv enthalten sein. Bevorzugt sind Additive in einer Menge von 0,001-10 Gew.-%, bevorzugt von 0,1-8 Gew.-%, stärker bevorzugt von 0,2-5 Gew.-% bezogen auf die Gesamtmenge der Kolloiddispersion zugegen.

Geeignete Additive sind beispielsweise Farbstoffe, Marker, Tracer, Geruchsstoffe, Biozide (Mikrobiozide, Bakterizide oder Fungizide), Desinfektionsmittel (Parabene, Aldehyde, Phenol-Derivate, quartäre Ammoniumverbindungen), Konservierungsstoffe (Isothiazolon-Derivate, Hydroxybenzoesäureester, Benzoate, Sorbate, Propionate, 2-Phenoxyethanol, 1,1'-Methylen-3,3'-bis(1-hydroxymethyl-2,5-dioxo-4-imidazolidinyl)-harnstoff, 1,3-Diphenylharnstoff, Diphenylether), Weichgriffmittel (Fettsäurekondensate oder/und modifizierte Polydimethylsiloxan), Vernetzer (blockierte Isocyanate, Oxazolin-Derivate), Stabilisatoren (Antioxidantien, Antiozonantien), Lichtschutzmittel (UV-Stabilisatoren, UV-Absorber, UV-Blocker), organische Verdickungsmittel (natürliche, organische, assoziative Verdickungsmittel, modifizierte Naturstoffe), halogenhaltige oder halogenfreie Flammschutzmittel, Entschäumer und Mischungen davon.

Als Biozid werden besonders bevorzugt Silberpräparate in Form von Silbersalzen, wie z.B. Silberhalogenide, Silbernitrat, Silberoxid, Silbersulfat, Silberchlorid, Silberphosphate, Silbercarbonat, Silberhydroxid, Silberacetat, Silberlactat, Silbercitrat, Silbersuccinat, Silberstearat, Silberoleat, Silbergluconat, Silberadipat, Silbermyristat, Silbersorbat, Alkali-Silber-Thiosulfate, Silber-Sulfadiazin, Silber-Alginate, Silber-Komplexe, elementarem Silber in nanopartikulärer oder kolloidaler Form, eingebettetem Silber in hochporösen Stoffen, wie z. B. Kieselsäure, Bentonit, Titandioxid und Aluminiumoxid, oder Mischungen davon eingesetzt.

In nanopartikulärer oder kolloidaler Form haben die Silberteilchen einen Durchmesser von 1 bis 100 nm, bevorzugt von 2 bis 55 nm, besonders bevorzugt von 6 bis 19 nm.

In einem weiteren Aspekt ist die Erfindung auf ein Verfahren zur Herstellung einer polykationischen Kolloiddispersion gerichtet, umfassend die Schritte

(a) Bereitstellen einer Dispersion aus Partikelkernen, die ein anorganisches Oxid, ausgewählt aus MgO, SiO$_2$, TiO$_2$ und Al$_2$O$_3$, oder/und ein anorganisches Salz, ausgewählt aus Salzen auf Silikat-, Aluminat-, Titanat-, Carbonat- oder/und Sulfat-Basis, enthalten, in einem flüssigen Medium, wobei die Partikelkerne einen Durchmesser von 1 nm bis 1000 nm haben, und
(b) Zugeben von mindestens

(b1) einem organischen Polykation, welches ein organisches Polymer ist, das mindestens 5 kationische Gruppen aufweist; und
(b2) einem Molekül mit mindestens einer reaktiv vernetzenden Gruppe; und
(b3) einem Molekül mit mindestens einer funktionellen Gruppe; oder
(b1') einem organischen Polykation, welches ein organisches Polymer ist, das mindestens 5 kationische Gruppen aufweist, mit mindestens einer reaktiv vernetzenden Gruppe und mindestens einem organischen Polykation, welches ein organisches Polymer ist, das mindestens 5 kationische Gruppen aufweist, mit mindestens einer funktionellen Gruppe; oder
(b2') einem organischen Polykation, welches ein organisches Polymer ist, das mindestens 5 kationische Gruppen aufweist, mit mindestens einer reaktiv vernetzenden und mindestens einer funktionellen Gruppe.

Ein Verfahren zur Herstellung der erfindungsgemäßen polykationischen Kolloiddispersion wird beschrieben, umfassend die Schritte

(a) Bereitstellen einer Dispersion aus Partikelkernen in einem flüssigen Medium und
(b) Zugeben von mindestens

(b1) einem organischen Polykation; oder/und
(b2) einem Molekül mit mindestens einer reaktiv vernetzenden Gruppe; oder/und
(b3) einem Molekül mit mindestens einer funktionellen Gruppe; oder/und
(b4) einem organischen Polykation mit mindestens einer reaktiv vernetzenden oder/und mindestens einer funktionellen Gruppe,

unter Bedingungen, dass sich eine Agglomeratschicht auf den Partikelkernen bildet.

Das Verfahren kann auch die Schritte umfassen

(a) Bereitstellen einer Dispersion aus Partikelkernen in einem flüssigen Medium und
(b') Zugeben von mindestens
(b1') einem organischen Polykation mit mindestens einer reaktiv vernetzenden Gruppe und ggf. mindestens einem organischen Polykation mit mindestens einer funktionellen Gruppe; oder/und
(b2') einem organischen Polykation mit mindestens einer reaktiv vernetzenden oder/und mindestens einer funktionellen Gruppe,

unter Bedingungen, dass sich eine Agglomeratschicht auf den Partikelkernen bildet.

Die verwendeten Partikelkerne werden in dem flüssigen Dispersionsmedium homogen dispergiert. Die Dispersion wird bevorzugt erhalten durch Rühren der Partikelkerne in dem flüssigen Medium. In der Dispersion gemäß Verfahrensschritt (a) können gegebenenfalls Dispergierhilfsmittel oder/und Additive zugegen sein. Um eine bessere Homogenisierung der Partikelkerne zu erreichen, kann die Dispersion hohen Scherkräften unterworfen werden, z.B. durch Homogenisierung mittels Ultraturrax®.

Durch Zugabe mindestens einer der Verbindungen/Mischungen (b1) bis (b4) oder (b1') bis (b2') bilden sich Partikelkerne, die von einer Agglomeratschicht umgeben sind. Die Zugabe mindestens einer der Verbindungen/Mischungen erfolgt unter Rühren bei Temperaturen zwischen 0 bis 40 °C, bevorzugt zwischen 10 bis 40 °C, stärker bevorzugt bei Raumtemperatur (20-25 °C), insbesondere bei einem Druck von 1-5 bar, bevorzugt bei 1 bar.

In einer anderen Ausführungsform umfasst das Verfahren zur Herstellung der erfindungsgemäßen polykationischen Kolloiddispersion die Schritte

(a) Bereitstellen einer Lösung einer löslichen Partikelkern-Vorstufe, ausgewählt aus Natriumsilikat, Natriumcarbonat und/oder Natriumaluminat, und

(b) Zugeben von mindestens

(b1) einem organischen Polykation; und
(b2) einem Molekül mit mindestens einer reaktiv vernetzenden Gruppe; und
(b3) einem Molekül mit mindestens einer funktionellen Gruppe; oder

(b1') einem organischen Polykation, welches ein organisches Polymer ist, das mindestens 5 kationische Gruppen aufweist, mit mindestens einer reaktiv vernetzenden Gruppe und mindestens einem organischen Polykation, welches ein organisches Polymer ist, das mindestens 5 kationische Gruppen aufweist, mit mindestens einer funktionellen Gruppe; oder

(b2') einem organischen Polykation, welches ein organisches Polymer ist, das mindestens 5 kationische Gruppen aufweist, mit mindestens einer reaktiv vernetzenden und mindestens einer funktionellen Gruppe.

Ein Verfahren zur Herstellung der erfindungsgemäßen polykationischen Kolloiddispersion wird beschrieben, umfassend die Schritte

(a) Bereitstellen einer Lösung einer löslichen Partikelkernvorstufe und
(b) Zugeben von mindestens

(b1) einem organischen Polykation; oder/und
(b2) einem Molekül mit mindestens einer reaktiv vernetzenden Gruppe; oder/und
(b3) einem Molekül mit mindestens einer funktionellen Gruppe; oder/und
(b4) einem organischen Polykation mit mindestens einer reaktiv vernetzenden oder/und mindestens einer funktionellen Gruppe,

unter Bedingungen, dass Partikelkerne mit darauf liegender Agglomeratschicht kolloidal ausgefällt werden.

Ein Verfahren zur Herstellung der erfindungsgemäßen polykationischen Kolloiddispersion wird beschrieben, umfassend die Schritte

(a) Bereitstellen einer Lösung einer löslichen Partikelkernvorstufe und
(b') Zugeben von mindestens

(b1') einem organischen Polykation mit mindestens einer reaktiv vernetzenden Gruppe und ggf. mindestens einem organischen Polykation mit mindestens einer funktionellen Gruppe; oder/und
(b2') einem organischen Polykation mit mindestens einer reaktiv vernetzenden oder/und mindestens einer funktionellen Gruppe,

unter Bedingungen, dass Partikelkerne mit darauf liegender Agglomeratschicht kolloidal ausgefällt werden.

Gemäß dem o.g. Verfahren können Partikelkerne *in situ* hergestellt werden, indem eine Lösung einer löslichen Partikelkernvorstufe, die ggf. Dispergierhilfsmittel oder/und Additive enthält, bereitgestellt wird, aus der durch Zugabe der Verbindungen (b1) bis (b4) bzw. (b1') bis (b2') unter Rühren Partikelkerne kolloidal ausgefällt werden.

Alternativ kann zwischen Schritt (a) und Schritt (b) ein Schritt (a1) erfolgen, in dem der pH-Wert, die Temperatur, die Ionogenität oder/und die Konzentration der Lösung aus Schritt (a) derart eingestellt wird, dass Partikelkerne kolloidal ausgefällt werden.

Die Herstellung von kolloidal ausgefällten Partikeln ist dem Fachmann bekannt und ist beispielsweise auf den Seiten 2299-2304 von Römpp Chemie Lexikon (9. Auflage, Prof. Dr. Jürgen Falbe und Prof. Dr. Manfred Regitz) oder unter Colloid Chemistry in Ullmann's Encyclopedia of Industrial Chemistry, Sixth Edition, 1999 ausführlich beschrieben.

Geeignete Partikelkernvorstufen sind lösliche, insbesondere wasserlösliche Salze oder Komplexe auf Basis von Carbonaten, Silicaten oder Aluminaten.

Besonders bevorzugte lösliche Partikelkernvorstufen sind Natriumsilikate, Natriumcarbonate, oder/und Natriumaluminate, stärker bevorzugt sind Natriumsilikate.

In einer anderen Ausführungsform sind geeignete Partikelkernvorstufen im flüssigen Medium lösliche organische Verbindungen, wie z.B. Salze von Fettsäuren, Polyacrylat, modifizierte Stärke und Zellulose .

Die *in situ* gefällten Partikelkerne weisen Partikeldurchmesser von 1 nm bis 1000 nm, bevorzugt von 2 nm bis 800 nm, stärker bevorzugt von 50 nm bis 500 nm und am stärksten bevorzugt von 10 nm bis 300 nm, auf.

Das molare Verhältnis von kationischen Gruppen : reaktiv vernetzenden Gruppen : funktionellen Gruppen im Kolloidpartikel liegt im Bereich von 1 bis 100 : 0,1 bis 10 : 0 bis 100, bevorzugt von 1 bis 50 : 0,1 bis 5 : 0,1 bis 50, stärker bevorzugt von 1 bis 10 : 0,1 bis 1 : 0,1 bis 10.

In beiden Verfahrensvarianten liegt das Verhältnis der Gesamtmenge von Komponenten (b1) bis (b4) bzw. (b1') bis (b2') zur Gesamtmenge an Partikelkernen im Bereich von 1:1-1000:1, bevorzugt bei 1:1 bis 500:1 oder 50 : 1 bis 200 : 1, stärker bevorzugt bei 50 : 1 bis 150 : 1.

Das Verhältnis zwischen der Gesamtmenge von Komponenten (b1) bis (b4) bzw. (b1') bis (b2') bezogen auf die Partikelkernoberfläche liegt im Bereich von 0,01 bis 100 g/m$^2$, bevorzugt 0,1 bis 50 g/m$^2$, stärker bevorzugt von 0,1 bis 10 g/m$^2$.

Die erfindungsgemäße polykationische Kolloiddispersion kann zur Modifizierung von Substraten verwendet werden.

Bevorzugte Substrate sind synthetische oder/und natürliche Fasern, z.B. aus Polyester (Polyethylenterephthalat oder Polybutylenterephthalat), Polyamid (Nylon oder Rayon), Polyacryl, Polyolefin (Polyethylen oder Polypropylen), Cellulose oder/und Viskose, und hieraus gewonnene Nonwovens oder/und Wovens, wie Vliese, Nassvliese, Vliesstoffe, Papier, textile Gewebe oder Gewirke. Flächige Substrate haben bevorzugt ein Flächengewicht von 30-800 g/m$^2$, stärker bevorzugt von 50-300 g/m$^2$.

Weitere bevorzugte Substrate sind Membranen oder Folien, z.B. aus Kunstoffen, wie Polyester (Polyethylenterephthalat oder Polybutylenterephthalat), Polyamid (Nylon oder Rayon), Polyacryl, Polyolefin (Polyethylen oder Polypropylen); natürliche oder synthetische Schwämme oder Schaumstoffe, z.B. Polyurethan-, Polystyrol- oder Polyolefinschaumstoffe, oder poröse Mineralien, z.B. Zeolithe.

Die Substrate können funktionelle Gruppen aufweisen, wie z.B. Cellulose, Viskose, Polyamide, Polyester, oder können chemisch funktionalisiert sein. Die eingesetzten Substrate können aber auch chemisch inert sein, wie z.B. Polyolefinfasern.

Ein weiterer Aspekt der Erfindung ist daher auch ein Verfahren zur Modifizierung von Substraten, umfassend die Schritte

(a) Aufbringen der erfindungsgemäßen Kolloiddispersion auf ein Substrat, das gegebenenfalls mindestens eine funktionelle Gruppe enthält,
(b) zumindest teilweises Entfernen des Dispersionsmediums und
(c) Umsetzen der reaktiv vernetzenden Gruppen mit den funktionellen Gruppen des polykationischen Kolloidpartikels oder/und des Substrats.

Das Aufbringen der erfindungsgemäßen Kolloiddispersion erfolgt nach den einem Fachmann bekannten diskontinuierlichen oder kontinuierlichen Verfahren, wie z.B. Aufzieh-, Foulard-, Sprüh-, Roll-, Druck-, Rakel- oder Tauchverfahren. Bevorzugte Verfahren zum Aufbringen der Kolloiddispersion sind Foulard-, Sprüh-, Roll- oder Druckverfahren.

Je nach Verfahren können die Kolloiddispersionen bei flächigen Substraten beidseitig oder einseitig aufgebracht werden.

Bevorzugt werden die polykationischen Kolloiddispersionen bei 0 bis 40 °C aufgebracht, stärker bevorzugt bei Raumtemperatur (20-25 °C).

Je nach Aufbringungsverfahren und gewünschter Ausrüstungsdicke kann die Dispersion vor der Applikation mit flüssigem (Dispersions-)Medium verdünnt oder durch Zusatz von Verdickungsmitteln verdickt werden.

Im Schritt (b) erfolgt ein zumindest teilweises Entfernen des flüssigen Mediums, vorzugsweise bei erhöhter Temperatur, insbesondere bei 40-200 °C und gegebenenfalls bei vermindertem Druck im Bereich von 0 und ≤ 1 bar, besonders bevorzugt von 50 mbar bis 1 bar. Das Entfernen des flüssigen Mediums kann mittels herkömmlichen Trocknungsverfahren, z.B. mit Heißluft oder Infrarotstrahlung durchgeführt werden.

Nach Schritt (b) enthält das mit der erfindungsgemäßen Kolloiddispersion modifizierte Substrat einen Gehalt von 5-500 Gew.-%, bevorzugt von 20-400 Gew.-%, stärker bevorzugt von 50-300 Gew.-% an flüssigem Medium bezogen auf das modifizierte Substrat.

Im Schritt (c) werden die reaktiv vernetzenden Gruppen in der Agglomeratschicht mit den funktionellen Gruppen, die sich gegebenenfalls in der Agglomeratschicht des polykationischen Kolloidpartikels oder/und auf dem Substrat befinden, umgesetzt.

Wie oben bereits ausgeführt, sind die reaktiv vernetzenden Gruppen während der Lagerung und des Applikationsvorgangs inaktiv und können thermisch oder/und chemisch aktiviert werden, so dass sie mit den funktionellen Gruppen, die sich gegebenenfalls in der Agglomeratschicht der erfindungsgemäßen Kolloidpartikel befinden oder/und an der Oberfläche des Substrats zugegen sind, kovalente Bindungen ausbilden können. Die thermische Aktivierung erfolgt bevorzugt bei Temperaturen $\geq$ 100 °C, bevorzugt $\geq$ 110 °C, bevorzugt $\geq$ 120 °C und bevorzugt $\geq$ 130 °C bis 200 °C.

Eine chemische Aktivierung kann beispielsweise durch Variation des pH-Werts um bevorzugt 2-10, stärker bevorzugt 5-8, noch stärker bevorzugt 6-8 pH-Einheiten erreicht werden. Die Mittel zur Anpassung des pH-Werts sind dem Fachmann bekannt.

Die Schritte (b) und (c) können auch ineinander übergehen, so dass sie nicht mehr als einzelne Schritte identifiziert werden können.

Die erfindungsgemäße Kolloiddispersion wird auf das Substrat in einer Menge aufgebracht, dass nach vollständiger Trocknung zwischen 0,5 und 200 Gew.-%, bevorzugt zwischen 0,5 und 50 Gew.-%, bevorzugt zwischen 1 und 10 Gew.-% der erfindungsgemäßen polykationischen Kolloidpartikel bezogen auf das Gesamtgewicht des modifizierten Substrats aufgebracht werden.

Weitere Verfahrensschritte, wie z.B. Neutralisieren und/oder Waschen, können angeschlossen werden.

Bei der Umsetzung der reaktiv vernetzenden Gruppen mit den funktionellen Gruppen können die Kolloidpartikel einerseits kovalente Bindungen zum Substrat ausbilden, sofern das Substrat funktionelle Gruppen an der Oberfläche trägt. Andererseits können die funktionellen Gruppen und die reaktiv vernetzenden Gruppen in der Agglomeratschicht der Kolloidpartikel untereinander reagieren, so dass sich auf dem Substrat eine Schicht untereinander vernetzter Kolloidpartikel bildet. Auf diese Weise können Kolloidpartikel auf dem Substrat fixiert werden, auch wenn das Substrat keine funktionellen Gruppen aufweist.

In einer bevorzugten Ausführungsform enthalten die erfindungsgemäßen Kolloidpartikel daher in der Agglomeratschicht mindestens ein Molekül mit mindestens einer funktionellen Gruppe, wenn damit ein Substrat modifiziert werden soll, das keine funktionellen Gruppen aufweist.

Ein weiterer Aspekt der Erfindung ist ein modifiziertes Substrat, das nach dem oben beschriebenen Verfahren erhältlich ist.

In einer bevorzugten Ausführungsform ist dabei das Substrat von untereinander kovalent vernetzten Kolloidpartikeln umhüllt. Gegebenenfalls ist das Substrat über dessen funktionelle Gruppen kovalent an mindestens einen Kolloidpartikel gebunden.

Bei beiden Alternativen ist gewährleistet, dass die Polykationen-haltigen Kolloidpartikel an dem Substrat permanent haften, und sich auch bei mehrmaligem (z.B. $\geq$ 1, bevorzugt $\geq$ 5, stärker bevorzugt $\geq$ 10) Waschen, z.B. bei 95 °C, nicht vom Substrat lösen.

Besonders hervorzuheben ist dabei, dass durch das erfindungsgemäße Verfahren auch Substrate ohne funktionelle Gruppen, wie z.B. Polyolefine, waschpermanent mit polykationischen Kolloidpartikeln in einfacher Weise ausgerüstet werden können.

Die modifizierten Substrate eignen sich damit insbesondere zum Entfernen von polyanionischen Verbindungen aus flüssigen Medien, wobei die (poly)anionischen Verbindungen bevorzugt aufgrund von elektrostatischen Wechselwirkungen von den (poly)kationischen Kolloidpartikeln adsorbiert werden.

Somit eignen sich die erfindungsgemäßen modifizierten Substrate insbesondere zum Entfernen von (poly)anionischen Farbstoffen aus der Waschflotte beim Reinigen von Textilien.

In einer bevorzugten Ausführungsform wird ein Vlies, insbesondere ein Synthetikvlies, bevorzugt aus Polyolefinen, Polyester, Polyurethan, bevorzugt aus Polyolefin, insbesondere Polyethylen, mit der erfindungsgemäßen Kolloiddispersion ausgerüstet. Sogenannte Farbfangtücher, beispielsweise mit einer Fläche von etwa < 1600 cm$^2$, bevorzugt 10-1500 cm$^2$, stärker bevorzugt 20-800 cm$^2$ werden dem Waschgut beim Waschen zugegeben. Aufgrund der waschpermanenten Ausrüstung können die Farbfangtücher für mehrere Waschvorgänge, bevorzugt für mindestens zwei, fünf, zehn, fünfzig oder hundert Waschvorgänge, z.B. bei 95 °C, benutzt werden. Die Farbfangtücher können ferner mit weiteren aktiven Substanzen, wie z.B. Waschmittel, Weichgriffmittel, Weichspüler, Duftstoffen, Silberpräparaten, ausgerüstet werden.

In einer anderen Ausführungsform können die Farbfangtücher, z.B. zu Beuteln, konfektioniert werden. Die erhaltenen Artikel können dann mit aktiven Substanzen, wie z.B. Waschmittel, Weichgriffmittel, Duftstoffen, Silberpräparaten, befüllt werden. Eine besonders einfache Konfektionierung, z.B. durch Heißsiegeln, wird durch Verwendung von synthetischen Polymer-Substraten, wie z.B. Polyolefinen und Polyestern, erreicht.

Für Farbfangtücher sind synthetische Polymersubstrate, insbesondere Polyolefine, außerdem wegen ihres günstigen Preises und ihrer geringen Fusselneigung besonders vorteilhaft.

In einer anderen Ausführungsvariante können die modifizierten Substrate, z.B. in Form von Filtern, zur Abwasseraufbereitung verwendet werden.

Die erfindungsgemäßen modifizierten Substrate weisen gegenüber den (geträgerten) Farbstoffübertragungsinhibitoren des Standes der Technik wesentliche Vorteile auf.

Die erfindungsgemäß eingesetzten Chemikalien sind über herkömmliche Verfahren herstellbar und entsprechend kostengünstig. Auf die Verwendung von gesundheitlich bedenklichen oder umweltschädigenden Reagenzien kann, wenn nicht gänzlich, zumindest weitgehend verzichtet werden.

Durch die geeignete Wahl der Agglomeratschicht der Kolloidpartikel kann eine breite Palette von verschiedenen (poly)anionischen Verbindungen, z.B. Farbstoffen, adsorbiert werden.

Aufgrund der hohen spezifischen Oberfläche der Kolloidpartikel (Durchmesser zwischen 10 nm und 100 $\mu$m) wird die Ladungsdichte an kationischen Gruppen auf dem Substrat signifikant erhöht, wodurch die (poly)anionischen Gruppen mit maximaler Effektivität adsorbiert werden können.

Das erfindungsgemäße Verfahren erlaubt ferner eine waschpermanente Modifizierung von Substraten ohne funktionelle Gruppen, wie z.B. von Polyolefinsubstraten, auf einfache Weise.

Im Folgenden wird die vorliegende Erfindung anhand der folgenden Beispiele näher erläutert.

## Methoden

Die angegebenen Molmassen wurden mittels Gelpermeationschromatographie (GPC) mit einem Polystyrol-Standard bestimmt.

Partikelgrößen wurden über dynamische Lichtstreuung mit einem Zetasizer Ver 6.12 (Malvern Instruments Ltd.) bei 25° C über eine Zeitdauer von 60 s bestimmt (470 kcps). Die Messposition lag bei 4,65 mm.

## Beispiele

### Beispiel 1: Herstellung einer polykationischen Kolloiddispersion (erfindungsgemäß)

In einem 300 ml Becherglas wurden 139 g Leitungswasser eingewogen und unter Rühren (300 rpm) 0,5 g Genamin S08, 0,5 g Ethoquat HT/25 und 0,5 g $TiO_2$ Partikel (< 50 nm) homogen dispergiert, 30 g Kondensat aus Dicyandiamid und Formaldehyd und 40 g Hydrocol KNI (Rudolf GmbH) wurden zugegeben. Der Feststoffgehalt beträgt ca. 10 %. Der pH Wert liegt bei ca. 4. Der Partikeldurchmesser beträgt durchschnittlich 2 $\mu$m.

### Beispiel 2:

### Herstellung einer polykationische Kolloiddispersion (erfindungsgemäß)

Analog Beispiel 1, allerdings werden statt $TiO_2$ $SiO_2$ ($d_{50}$ ca. 12 nm), und statt Kondensat aus Dicyandiamid und Formaldehyd, Poly-DADMAC-Polydimethylsiloxan Copolymer verwendet. Der Feststoffgehalt beträgt ca. 7,5 %. Der pH Wert liegt bei ca. 5. Der Partikeldurchmesser beträgt durchschnittlich 0,7 $\mu$m.

### Beispiel 3:

### Herstellung einer polykationischen Lösung (nicht erfindungsgemäß)

Wässerige Sokalan® HP 56 K Lösung (BASF) aus einem Copolymer von Vinylpyrrolidon und Vinylimidazol (PVP/PVI). Der Feststoffgehalt beträgt ca. 5 %. Der pH Wert liegt bei ca. 7.

### Beispiel 4:

### Herstellung einer polykationischen Lösung (nicht erfindungsgemäß)

Wässerige Lösung von Poly-DADMAC-Polydimethylsiloxan Copolymer. Der Feststoffgehalt beträgt ca. 5 %. Der pH Wert liegt bei ca. 5.

**Beispiel 5:**

**Herstellung eines polykationisierten Vlieses**

Material: Vliesstoff aus Zellulose (50 g/m$^2$) und Polyester (50 g/m
Ausrüstungsmittel: Beispiel 1 bis 4
Ausrüstung: Der Vliesstoff wird bei Raumtemperatur (RT) in die jeweilge Kolloiddispersion eingetaucht, durch Walzen gequetscht (Flottenaufnahme ca. 150 Gew.-%) und anschließend bei 150 °C /2 min getrocknet.

**Beispiel 6:**

**Prüfung der Farbfangkapazität des polykationisierten Vlieses**

Materialien:

Farbstofflösung: Somazin Rot RB-Lösung ($c_1$ =100 oder 200 mg/l Wasser) Prüfling: Polykationisiertes Vlies aus Polyester oder Zellulose

Durchführung:

In ein 100 ml-Becherglas werden ca. 50ml (X) der Farbstofflösung mit einer Konzentration $c_1$ bei RT eingewogen und ca.0,5 g (Y) polykationisiertes Vlies zugegeben. Nach 10 min Schütteln wird das Vlies entnommen und die Konzentration $c_2$ des Restfarbstoffes in der Testlösung fotometrisch bestimmt. Die Farbfangkapazität (FK = mg Farbstoff/g Vlies) wird mit folgender Formel ermittelt:

$$FK=(c_1-c_2)*X/Y/1000$$

Tabelle 1

| Vlies ausgerüstet mit | Farbfangkapazität [mg Farbstoff*/g Vlies] | | | |
|---|---|---|---|---|
| | Vlies aus Zellulose (50 g/m$^2$) | | Vlies aus Polyester (50 g/m$^2$) | |
| | pH 5 | pH 10 | pH 5 | pH 10 |
| 50 % Beispiel 1 + 50 % Wasser | 29 | 26 | 28 | 20,6 |
| 67 % Beispiel 2 + 33 % Wasser | 35 | 18 | 26 | 15 |
| 100 % Beispiel 3 | 1,5 | 1,47 | 2,1 | 1,36 |
| 100 % Beispiel 4 | 8,5 | 8,2 | 7,3 | 4,3 |
| Color Catcher (Benchmark) | 16 | 14 | | |

**Beispiel 7:**

**Prüfung des polykationisierten Vlieses als Farbfangtuch beim Waschen**

Materialien:

Farblösung A: 1 % Sirius rot F4BL (Direktfarbstoff)
Farblösung B: 1 % Somazin Rot RB-Lösung (Azo-Reaktivfarbstoff)
Waschflotte: 0,75 g/l Feinwaschmittel in Leitungswasser gelöst
Begleitgewebe: Weiße Maschenware aus Baumwolle

Prüfling: polykationisiertes Vlies aus Polyester
Maschine: Linitest

Durchführung:

In ein 250 ml-Becherglas wurden 135 g Waschflotte eingewogen und 7,5 g Farbstofflösung A und 7,5 g Farbstofflösung B zugegeben. Die Waschflotte enthält ca. 100 mg/l Farbstoff. 1 g Prüfling (Polykationisiertes Vlies) und ein Stück Begleitgewebe 5 cm x 6 cm wurden in 150 ml Waschflotte zugegeben und 30 min bei ca. 60 °C und 60 rpm. erhitzt. Der Prüfling und die Begleitgewebe wurden entnommen und mit Leitungswasser kurz kalt abgespült.

Beurteilung:

1. Farbe der Prüflinge: je tiefer die Farbe ist, desto mehr Farbstoff wurde adsorbiert.
2. Farbe der Begleitgewebe: je heller die Farbe ist desto weniger Farbstoff wurde übertragen.
3. Farbe der Waschflotte: Je heller die Farbe ist, desto weniger Rest-Farbstoff ist in der Waschflotte.

Tabelle 2

| Vlies ausgerüstet mit | **Verfärbung beim Waschen** Vlies aus Polyester (150 g/m$^2$) | | |
|---|---|---|---|
| | Farbe des polykationisierten Vlieses | Farbe der Begleitgewebe | Farbe der Waschflotte |
| 50 % Beispiel 1 + 50 % Wasser | rot | leicht rosa bis farblos | leicht rosa bis farblos |
| 67 % Beispiel 2 + 33 % Wasser | rot | leicht rosa bis farblos | leicht rosa bis farblos |
| 100 % Beispiel 3 | farblos | dunkel rosa | rot |
| 100 % Beispiel 4 | farblos | dunkel rosa | rot |

**Beispiel 8:**

**Prüfung des polykationisierten Vlieses als Farbfangtuch beim bunten Waschen im Haushalt**

Ca. 10 g polykationisiertes Vlies wird mit einem Stück weißer Baumwoll-Maschenware (ca. 10 cm x 15 cm) in der Waschmaschine mit bunter Wäsche bei 60°C gewaschen.

Tabelle 3

| Vlies ausgerüstet mit | **Verfärbung beim bunten Waschen im Haushalt** Vlies aus Polyester (150 g/m$^2$) | |
|---|---|---|
| | Farbe des polykationisierten Vlieses | Farbe der weißen Baumwoll-Maschenware |
| 50 % Beispiel 1 + 50 % Wasser | grau | weiß, keine Anschmutzung |
| 67 % Beispiel 2 + 33 % Wasser | grau | weiß, keine Anschmutzung |
| 100 % Beispiel 3 | weiß | grau, Anschmutzung |
| 100 % Beispiel 4 | weiß | grau, Anschmutzung |

**Patentansprüche**

**1.** Polykationische Kolloidpartikel, umfassend mindestens einen Partikelkern und eine darauf liegende Agglomeratschicht, wobei die Agglomeratschicht mindestens ein organisches Polykation, welches ein organisches Polymer ist, das mindestens 5 kationische Gruppen aufweist, mindestens ein Molekül mit mindestens einer reaktiv vernetzenden Gruppe, ausgewählt aus Epoxiden, Halogeniden, (blockierten) Isocyanaten, N-Methylol und ungesättigten Gruppen, und mindestens ein Molekül mit mindestens einer funktionellen Gruppe, ausgewählt aus Amino-, Hydroxy-, Amid-Imid und Carboxy-Gruppen, enthält, wobei der Partikelkern anorganische Oxide, ausgewählt aus MgO, $SiO_2$, $TiO_2$, und $Al_2O_3$ oder/und anorganische Salze ausgewählt aus Salzen auf Silikat-, Aluminat-, Titanat-, Carbonat- oder/und Sulfat-Basis enthält und wobei der Durchmesser des Kolloidpartikels 10 nm bis 100 μm beträgt.

2. Polykationische Kolloidpartikel nach Anspruch 1, wobei das Molekül mit mindestens einer reaktiv vernetzenden Gruppe und/oder das Molekül mit mindestens einer funktionellen Gruppe ein organisches Polymer ist.

3. Polykationische Kolloidpartikel nach einem der Ansprüche 1-2, wobei das Molekül mit mindestens einer vernetzenden Gruppe oder/und das Molekül mit mindestens einer funktionellen Gruppe ein organisches Polykation ist.

4. Polykationische Kolloidpartikel nach einem der Ansprüche 1-3, wobei ein organisches Polykation quaternäre Ammonium-, Pyridinium- oder/und Phosphoniumionen, insbesondere quaternäre Ammoniumionen, enthält.

5. Polykationische Kolloiddispersion, umfassend

(a) polykationische Kolloidpartikel nach einem der Ansprüche 1-4,
(b) mindestens ein flüssiges Medium, insbesondere Wasser, Alkohol, Aceton oder Mischungen davon,
(c) gegebenenfalls mindestens ein Dispergierhilfsmittel, insbesondere ein kationisches, nicht-ionisches, anonisches Tensid oder eine Mischung davon, und
(d) gegebenenfalls mindestens ein Additiv, insbesondere Farbstoffe, Geruchsstoffe, Biozide, Antioxidantien, UV-Stabilisatoren, Weichgriffmittel oder Mischungen davon.

6. Verfahren zur Herstellung der polykationischen Kolloiddispersion nach Anspruch 5, umfassend die Schritte

(a) Bereitstellen einer Dispersion aus Partikelkernen, die ein anorganisches Oxid, ausgewählt aus MgO, $SiO_2$, $TiO_2$ und $Al_2O_3$, oder/und ein anorganisches Salz, ausgewählt aus Salzen auf Silikat-, Aluminat-, Titanat-, Carbonat- oder/und Sulfat-Basis, enthalten, in einem flüssigen Medium, wobei die Partikelkerne einen Durchmesser von 1 nm bis 1000 nm haben, und
(b) Zugeben von mindestens

(b1) einem organischen Polykation, welches ein organisches Polymer ist, das mindestens 5 kationische Gruppen aufweist; und
(b2) einem Molekül mit mindestens einer reaktiv vernetzenden Gruppe; und
(b3) einem Molekül mit mindestens einer funktionellen Gruppe; oder
(b1') einem organischen Polykation, welches ein organisches Polymer ist, das mindestens 5 kationische Gruppen aufweist, mit mindestens einer reaktiv vernetzenden Gruppe und mindestens einem organischen Polykation, welches ein organisches Polymer ist, das mindestens 5 kationische Gruppen aufweist, mit mindestens einer funktionellen Gruppe; oder
(b2') einem organischen Polykation, welches ein organisches Polymer ist, das mindestens 5 kationische Gruppen aufweist, mit mindestens einer reaktiv vernetzenden und mindestens einer funktionellen Gruppe.

7. Verfahren zur Herstellung der polykationischen Kolloiddispersion nach Anspruch 5, umfassend die Schritte

(a) Bereitstellen einer Lösung einer löslichen Partikelkern-Vorstufe, ausgewählt aus Natriumsilikaten, Natriumcarbonaten oder/und Natriumaluminaten, und
(b) Zugeben von mindestens

(b1) einem organischen Polykation; und
(b2) einem Molekül mit mindestens einer reaktiv vernetzenden Gruppe; und
(b3) einem Molekül mit mindestens einer funktionellen Gruppe; oder
(b1') einem organischen Polykation, welches ein organisches Polymer ist, das mindestens 5 kationische Gruppen aufweist, mit mindestens einer reaktiv vernetzenden Gruppe und mindestens einem organischen Polykation, welches ein organisches Polymer ist, das mindestens 5 kationische Gruppen aufweist, mit mindestens einer funktionellen Gruppe; oder

(b2') einem organischen Polykation, welches ein organisches Polymer ist, das mindestens 5 kationische Gruppen aufweist, mit mindestens einer reaktiv vernetzenden und mindestens einer funktionellen Gruppe.

8. Verwendung der polykationischen Kolloiddispersion nach Anspruch 5 zur Modifizierung von Substraten, insbesondere von synthetischen oder/und natürlichen Fasern, wie z.B. Zellulose-, Polyester-, Polyamid- oder/und Polyolefin-Fasern.

9. Verfahren zur Modifizierung von Substraten, umfassend die Schritte

(a) Aufbringen der Kolloiddispersion nach Anspruch 5 auf ein Substrat, das gegebenenfalls mindestens eine funktionelle Gruppe enthält,
(b) zumindest teilweises Entfernen des flüssigen Mediums, insbesondere bei erhöhter Temperatur, insbesondere bei 40-200 °C, und
(c) Umsetzen der reaktiv vernetzenden Gruppen mit den funktionellen Gruppen des polykationischen Kolloidpartikels oder/und des Substrats, insbesondere nach thermischer Aktivierung.

10. Modifiziertes Substrat, erhältlich nach einem Verfahren gemäß Anspruch 9.

11. Modifiziertes Substrat nach Anspruch 10, wobei das Substrat von untereinander kovalent vernetzten Kolloidpartikeln umhüllt ist und gegebenenfalls an mindestens einen Kolloidpartikel kovalent gebunden ist.

12. Verwendung des modifizierten Substrats nach einem der Ansprüche 10 oder 11 zum Entfernen von (poly)anionischen Verbindungen aus flüssigen Medien, insbesondere zum Entfernen von Farbstoffen aus der Waschflotte beim Reinigen von Textilien oder zur Abwasseraufbereitung.

## Claims

1. Polycationic colloid particle, comprising at least one particle core and an agglomerate layer located thereon, wherein the agglomerate layer contains at least one organic polycation, which is an organic polymer and has at least five cationic groups, at least one molecule having at least one reactively crosslinking group, selected from epoxides, halides, (blocked) isocyanates, N-methylol and unsaturated groups, and at least one molecule having at least one functional group, selected from amino, hydroxy, amide, imide and carboxy groups, wherein the particle core contains inorganic oxides, selected from MgO, $SiO_2$, $TiO_2$ and $Al_2O_3$ and/or inorganic salts selected from silicate-, aluminate-, titanate-, carbonate- and/or sulfate-based salts, and wherein the diameter of the colloid particle is from 10 nm to 100 $\mu$m.

2. Polycationic colloid particle according to claim 1, wherein the molecule having at least one reactively crosslinking group and/or the molecule having at least one functional group is an organic polymer.

3. Polycationic colloid particle according to either claim 1 or claim 2, wherein the molecule having at least one reactively crosslinking group and/or the molecule having at least one functional group is an organic polycation.

4. Polycationic colloid particle according to any of claims 1 to 3, wherein an organic polycation contains quaternary ammonium, pyridinium and/or phosphonium ions, in particular quaternary ammonium ions.

5. Polycationic colloid dispersion comprising:

(a) a polycationic colloid particle according to any of claims 1 to 4;
(b) at least one liquid medium, in particular water, alcohol, acetone or mixtures thereof;
(c) optionally at least one dispersant, in particular a cationic, non-ionic, anionic surfactant or a mixture thereof; and
(d) optionally at least one additive, in particular dyes, odorants, biocides, antioxidants, UV stabilisers, softeners or mixtures thereof.

6. Method for preparing the polycationic colloid dispersion according to claim 5, comprising the steps of:

(a) providing a dispersion of particle cores which contain an inorganic oxide, selected from MgO, $SiO_2$, $TiO_2$ und $Al_2O_3$, and/or an inorganic salt, selected from silicate-, aluminate-, titanate-, carbonate- and/or sulfate-based salts, in a liquid medium, wherein the particle cores have a diameter of from 1 nm to 1000 nm; and
(b) adding at least:

(b1) one organic polycation which is an organic polymer and has at least five cationic groups; and
(b2) one molecule having at least one reactively crosslinking group; and
(b3) one molecule having at least one functional group; or
(b1') one organic polycation which is an organic polymer that has at least five cationic groups, having at least one reactively crosslinking group and at least one organic polycation, which is an organic polymer and has at least five cationic groups, having at least one functional group; or
(b2') one organic polycation, which is an organic polymer and has at least five cationic groups, having at least one reactively crosslinking group and at least one functional group.

7. Method for preparing the polycationic colloid dispersion according to claim 5, comprising the steps of:

(a) providing a solution of a soluble particle core precursor selected from sodium silicates, sodium carbonates and/or sodium aluminates; and
(b) adding at least:

(b1) one organic polycation; and
(b2) one molecule having at least one reactively crosslinking group; and
(b3) one molecule having at least one functional group; or
(b1') one organic polycation, which is an organic polymer and has at least five cationic groups, having at least one reactively crosslinking group and at least one organic polycation, which is an organic polymer and has at least five cationic groups, having at least one functional group; or
(b2') one organic polycation, which is an organic polymer and has at least five cationic groups, having at least one reactively crosslinking group and at least one functional group.

8. Use of the polycationic colloid dispersion according to claim 5 for modifying substrates, in particular synthetic and/or natural fibres, for example cellulose, polyester, polyamide and/or polyolefin fibres.

9. Method for modifying substrates, comprising the steps of:

(a) applying the colloid dispersion according to claim 5 to a substrate, which optionally contains at least one functional group;
(b) removing at least some of the liquid medium, in particular at an increased temperature, in particular at a temperature of from 40 to 200°C; and
(c) reacting the reactively crosslinking groups with the functional groups of the polycationic colloid particle and/or of the substrate, in particular after thermal activation.

10. Modified substrate, obtainable using a method according to claim 9.

11. Modified substrate according to claim 10, wherein the substrate is encapsulated by colloid particles that are mutually covalently crosslinked, and is optionally covalently joined to at least one colloid particle.

12. Use of the modified substrate according to either claim 10 or claim 11 for removing (poly)anionic compounds from liquid media, in particular for removing dyes from the washing liquor when cleaning textiles, or for wastewater treatment.

**Revendications**

1. Particules colloïdales polycationiques, comprenant au moins un noyau de particule et une couche d'agglomérat déposée sur celui-ci, dans laquelle la couche d'agglomérat contient au moins un polycation organique, lequel est un polymère organique comportant au moins 5 groupements cationiques, au moins une molécule avec au moins un groupement réactif de réticulation choisi parmi un époxyde, un halogénure, un isocyanate (bloqué), un N-méthylol et un groupement insaturé, et au moins une molécule avec au moins un groupe fonctionnel choisi parmi un amino, un hydroxy, un amide, un imide et un carboxyle, dans lesquelles le noyau de particule contient un oxyde inorganique choisi parmi MgO, $SiO_2$, $TiO_2$ et $Al_2O_3$ et/ou un sel inorganique choisi parmi les sels à base de silicate, d'aluminate, de titanate, de carbonate et/ou de sulfate et dans laquelle le diamètre des particules colloïdales est compris entre 10 nm et 100 μm.

2. Particules colloïdales polycationiques selon la revendication 1, dans lesquelles la molécule avec au moins un groupement réactif de réticulation et/ou la molécule avec au moins un groupe fonctionnel est un polymère organique.

3. Particules colloïdales polycationiques selon l'une des revendications 1 et 2, dans lesquelles la molécule avec au moins un groupement réactif de réticulation et/ou la molécule avec au moins un groupe fonctionnel est un polycation organique.

4. Particules colloïdales polycationiques selon l'une des revendications 1 à 3, dans lesquelles un polycation organique contient des ions ammonium quaternaire, pyridinium et/ou phosphonium, en particulier des ions ammonium quaternaire.

5. Dispersion colloïdale polycationique, comprenant

(a) des particules colloïdales polycationiques selon l'une des revendications 1 à 4,
(b) au moins un milieu liquide, en particulier eau, alcool, acétone ou un mélange de ceux-ci,
(c) le cas échéant, au moins un agent dispersant, en particulier un tensioactif cationique, non-ionique ou anionique ou un mélange de ceux-ci, et
(d) le cas échéant, au moins un additif, en particulier des pigments, des parfums, des biocides, des antioxydants, des stabilisants UV, des assouplissants ou des mélanges de ceux-ci.

6. Procédé de fabrication de la dispersion colloïdale polycationique selon la revendication 5, comprenant les étapes

(a) disposition d'une dispersion de noyaux de particules, lesquels contiennent un oxyde inorganique choisi parmi MgO, $SiO_2$, $TiO_2$ et $Al_2O_3$ et/ou un sel inorganique choisi parmi les sels à base de silicate, d'aluminate, de titanate, de carbonate et/ou de sulfate, dans un milieu liquide, dans lequel les noyaux de particules ont un diamètre compris entre 1 nm et 1000 nm, et
(b) ajout d'au moins

(b1) un polycation organique, lequel est un polymère organique comportant au moins 5 groupements cationiques ; et
(b2) une molécule avec au moins un groupement réactif de réticulation ; et
(b3) une molécule avec au moins un groupe fonctionnel ; ou
(b1') un polycation organique, lequel est un polymère organique comportant au moins 5 groupements cationiques, avec au moins un groupement réactif de réticulation et au moins un polycation organique, lequel est un polymère organique comportant au moins 5 groupements cationiques, avec au moins un groupe fonctionnel ; ou
(b2') un polycation organique, lequel est un polymère organique comportant au moins 5 groupements cationiques, avec au moins un groupement réactif de réticulation et au moins un groupe fonctionnel.

7. Procédé de fabrication de la dispersion colloïdale polycationique selon la revendication 5, comprenant les étapes

(a) disposition d'une solution d'un précurseur de noyaux de particules soluble choisi parmi du silicate de sodium, du carbonate de sodium ou/et de l'aluminate de sodium, et
(b) ajout d'au moins

(b1) un polycation organique ; et
(b2) une molécule avec au moins un groupement réactif de réticulation ; et
(b3) une molécule avec au moins un groupe fonctionnel ; ou
(b1') un polycation organique, lequel est un polymère organique comportant au moins 5 groupements cationiques avec au moins un groupement réactif de réticulation et au moins un polycation organique, lequel est un polymère organique comportant au moins 5 groupements cationiques, avec au moins un groupe fonctionnel ; ou
(b2') un polycation organique, lequel est un polymère organique comportant au moins 5 groupements cationiques, avec au moins un groupement réactif de réticulation et au moins un groupe fonctionnel.

**8.** Application de la dispersion colloïdale polycationique selon la revendication 5 en vue de la modification de substrats, en particulier de fibres synthétiques et/ou naturelles telles que, par exemple, des fibres de cellulose, de polyester, de polyamide ou/et de polyoléfine.

**9.** Procédé de modification de substrats, comprenant les étapes

(a) application de la dispersion colloïdale selon la revendication 5 sur un substrat, lequel contient, le cas échéant, au moins un groupe fonctionnel,
(b) élimination au moins partielle du milieu liquide, en particulier à température élevée, en particulier à 40-200 °C, et
(c) mise en oeuvre des groupements réactifs de réticulation avec les groupes fonctionnels de la particule colloïdale polycationique ou/et du substrat, en particulier après activation thermique.

**10.** Substrat modifié, obtenu après un procédé selon la revendication 9.

**11.** Substrat modifié selon la revendication 10, dans lequel le substrat est enrobé de particules colloïdales réticulées de manière covalente et, le cas échéant, est lié de façon covalente à au moins une particule colloïdale.

**12.** Application du substrat modifié selon l'une des revendications 10 et 11 pour l'élimination de composés (poly)anioniques d'un milieu liquide, en particulier pour l'élimination de pigments de l'eau de lavage lors du nettoyage de textiles ou pour le traitement des eaux usées.

**In der Beschreibung aufgeführte Patentdokumente**

- DE 2321724 A
- DE 2309099 A
- DE 3519012 A
- DE 3840056 A
- DE 3124210 A
- WO 1994002581 A
- WO 1996026831 A
- EP 33815 A2
- US 3673110 A
- WO 0212424 A
- DE 102009027047 A1
- EP 1775372 A
- WO 0194516 A1
- GB 2432844 A
- WO 2007063001 A1
- WO 02103105 A2

**In der Beschreibung aufgeführte Nicht-Patentliteratur**

- **PROF. DR. JÜRGEN FALBE ; PROF. DR. MANFRED REGITZ.** Römpp Chemie Lexikon. 2299-2304
- Colloid Chemistry in Ullmann's Encyclopedia of Industrial Chemistry. 1999